# EUROPÄISCHE PATENTSCHRIFT

(11) **EP 1 106 328 B1**
(45) Veröffentlichungstag und Bekanntmachung des Hinweises auf die Patenterteilung: **20.08.2003**
(21) Anmeldenummer: 00125330.1
(22) Anmeldetag: 30.11.2000
(51) Int. Cl.: B29C 47/10, B29C 47/58

(54) **Extrusionsvorrichtung**
Extruder
Extrudeuse

(30) Priorität: 08.12.1999 DE 19959174
(43) Veröffentlichungstag der Anmeldung: 13.06.2001
(73) Patentinhaber: A-Z Formen- und Maschinenbau GmbH, 80992 München (DE)
(72) Erfinder: Fischer, Florian, 85560 Ebersberg (DE)
(74) Vertreter: Baronetzky, Klaus, Dipl.-Ing.

(56) Entgegenhaltungen:
- DE-C- 3 808 723
- DE-U- 29 818 696
- US-A- 4 537 568
- US-A- 5 674 004

## Beschreibung

Die Erfindung betrifft eine Extrusionsvorrichtung, gemäß dem Oberbegriff von Anspruch 1, sowie ein entsprechendes Verfahren, gemäß dem Oberbegriff von Anspruch 18.

Eine Extansions vorrichtung und ein Verfahren vergleichbarer Art sind beispielsweise aus der DE-U-29 818 696 bekannt.

Extrusionsvorrichtungen dienen der Förderung von Material, insbesondere von Kunststoffen, wobei in aller Regel die Extrusionsvorrichtung beheizt ist und das in Granulat- oder Streifenform zugeführte Material im Verlaufe der Extrusion plastifiziert wird. Bei der Zufuhr von Streifen aus zu plastifizierendem Material muß sichergestellt sein, daß die Extruderschnecke stets ausreichend mit Materialvorrat versorgt wird, denn eine unzureichende Materialzufuhr führt unweigerlich zu Lufteinschlüssen, die je nach Anwendungsfall nicht akzeptabel sind. Um die Materialzufuhr kontrollieren zu können, wurde bei sich waagrecht erstreckender Extruderschnecke häufig von oben der Materialstreifen oder das Granulat zugeführt. Ein Beispiel für diese Lösung ist aus der DE-OS 31 33 708 ersichtlich. Bei dieser Extrusionsvorrichtung sollen die Leistungsschwankungen der Extrusionsvorrichtung durch eine spezielle Speisezone der Schnecke bekämpft werden.

Nachteilig bei dieser Lösung ist, daß ein Mischen lediglich an einer Stelle stattfindet, wobei zudem die Extruderschnecke radial einseitig belastet wird. Dies kann auch dazu führen, daß sie sich durchbiegt, was dazu führt, daß dann auf der gegenüberliegenden Seite Metall auf Metall schleift, mit den entsprechenden nachteiligen Auswirkungen.

Untersuchungen haben ergeben, daß die Qualität der Fütterung entscheidend für die Leistung des Extruders ist. Dementsprechend hat man versucht, eine möglichst gute Synchronisierung zwischen den Zufuhrwalzen des Streifenförderers und dem Antrieb der Extruderschnecke zu gewährleisten. Dennoch ergibt sich bei der weithin eingesetzten radialen Zufuhr in vielen Fällen ein ungleichmäßiger Füllungsgrad der Schneckengänge, so daß es bekannt geworden ist, nach Möglichkeit mehrere Schneckengänge gleichzeitig zu befüllen. Eine derartige Lösung ist beispielsweise aus der DE-PS 40 05 400 ersichtlich, die anstrebt, einen Stauwulst konstant zu halten.

Diese Lösung stellt zwar grundsätzlich einen interessanten Ansatz dar. Andererseits wird das Material vor der eigentlichen Plastifizierung recht stark auf Scherung belastet, was die Materialeigenschaften verschlechtert.

Aus der DE-U-298 18 696 ist ein Schweißgerät zum Verschweißen von Kunststoffwerkstücken bekannt geworden. Ein drahtförmiges Material wird zugeführt und ist während der Drehung der Förderschnecke förderbar. Diese Lösung vermag jedoch das Einführen von Lufteinschlüssen nicht zu verhindern.

Aus der US-A-5,674,004, aber auch aus der US-A-4,537,568, ist die Zufuhr von im wesentlichen streifenförmigem Material bekannt. Diese Lösungen sind jedoch für die Speisung einer Extruderschnecke ungeeignet.

Aus der DE-C1-38 08 723 ist ein Schweißgerät bekannt, bei welchem Schweißdraht radial einem Förderelement zugeführt wird. Die Zufuhr erfolgt geradlinig, um auch Schweißstäbe verarbeiten zu können. Auch diese Lösung vermag Lufteinschlüsse nicht zu verhindern.

Dementsprechend liegt der Erfindung die Aufgabe zugrunde, eine Extrusionsvorrichtung gemäß dem Oberbegriff von Anspruch 1 zu schaffen, die hinsichtlich der Gesamtleistung verbessert ist, ohne daß besonders aufwendige Maßnahmen bei der Steuerung der Zufuhr des zu extrudierenden Materials erforderlich wären.

Diese Aufgabe wird erfindungsgemäß durch die Extansion vorritchung nach Anspruch 1 sowie durch das Verfahren nach Anspruch 18 gelöst. vorteilhafte Weiterbildungen ergeben sich aus den Unteransprüchen.

Mit der erfindungsgemäßen Lösung der axialen Zufuhr von Materialstreifen zum Extruder wird zunächst die Möglichkeit eröffnet, den einseitigen radialen Druck auf die Extruderschnecke zu vermeiden. Ferner wird die Extruderschnecke über ihren ganzen Umfang befüllt, was einen besonderen Vorteil darstellt, denn hierdurch ist die Wahrscheinlichkeit, daß Lufteinschlüsse die Qualität des Extrudats verschlechtern, deutlich herabgesetzt.

Der Streifen kann der Welle zwischen Antriebsmotor und Extruderschnecke schräg zugeführt und von dieser mitgenommen werden. Hierzu reicht es aus, wenn der Materialstreifen schräg zur Welle hin hängengelassen wird, so daß die dortigen Mitnehmer den Streifen mindestens im Reibschluß erfassen können.

Bei dieser Lösung kann dafür Sorge getragen werden, daß eine kontinuierliche Zufuhr zur Extruderschnecke sichergestellt ist. Wenn die Mitnehmer der Welle beispielsweise nach der Art von Haken ausgebildet sind, kann der Materialstreifen an seinem vorderen Ende dort manuell eingehakt werden. Anschließend hieran ziehen die Mitnehmer automatisch mit der richtigen Geschwindigkeit und damit dem richtigen Füllungsgrad für die Extruderschnecke den Materialstreifen ein, und zwar dergestalt, daß das Material die Extruderschnecke im Übergangsbereich, also beim Beginn der Extruderschnecke, vollständig umgibt. Besonders günstig ist es hierbei, daß die Notwendigkeit einer partiellen Gegenströmung, und damit zugleich auch die hiermit verbundenen Probleme hinsichtlich der Materialbelastung auf Scherung, vollständig vermieden werden können. Die mit dem Stauwulst angestrebte Vergleichmäßigung ergibt sich gleichsam automatisch, nachdem um den Umfang der Extruderschnecke betrachtet gleiche Verhältnisse vorliegen.

In einer vorteilhaften Ausgestaltung ist es vorgesehen, daß der Streifen nicht in mehreren Windungen um die Welle gewickelt, sondern nach der Art eines aufgestülpten Rohres der Extruderschnecke zugeführt wird. Bei dieser Lösung ist es besonders günstig, wenn eine Gewindebuchse gegenüber der Extruderschnecke gegenläufig rotiert und damit die erforderliche Materialvergleichmäßigung sicherstellt. Bei dieser Lösung erstreckt sich der Streifen dann im Bereich der Welle über etwa 3/4 des Umfangs der Welle, so daß durch die Drehung und Gegendrehung die erwünschte Verteilung realisiert wird.

Besonders günstig ist es, daß durch die erfindungsgemäß verbesserte Ringzuführung zur Extruderschnecke der Ausstoß um etwa ein Fünftel verbessert werden kann.

Gemäß einer besonders vorteilhaften Ausgestaltung der Erfindung ist es vorgesehen, den Übergangsbereich zwischen Welle und Extruderschnecke am vorderen Ende des Extrudergehäuses vorzusehen und das Extrudergehäuse an dieser Stelle aufgeweitet auszubilden, so daß es in Strömungsrichtung betrachtet sich konisch zur Extruderschnecke hin verjüngt. Bei dieser Lösung wird ein schräg hereinhängender Materialstreifen gleichsam automatisch erfaßt und von der Extruderschnecke verarbeitet.

Es versteht sich, daß der Winkel, in welchem der Materialstreifen im Zuführbereich zugeführt wird, in weiten Bereichen an die Erfordernisse anpaßbar ist. Beispielsweise kann der Streifenförderer, der entsprechende Förderwalzen für den Materialstreifen aufweist, so ausgelegt sein, daß sich seine Auslaßachse in einem Winkel von beispielsweise 30° zur Welle erstreckt, wobei der Auftreffpunkt der Auslaßachse auf die Welle dann bevorzugt knapp hinter dem Beginn der Welle, also dem Antriebsmotor benachbart, vorgesehen ist. Der Materialstreifen wird dann beim Auftreffen auf die Welle umgelenkt, und zwar in einer achsparallelen Richtung, so daß er beim Erreichen des Übergangsbereichs parallel zur Achse der Welle verläuft.

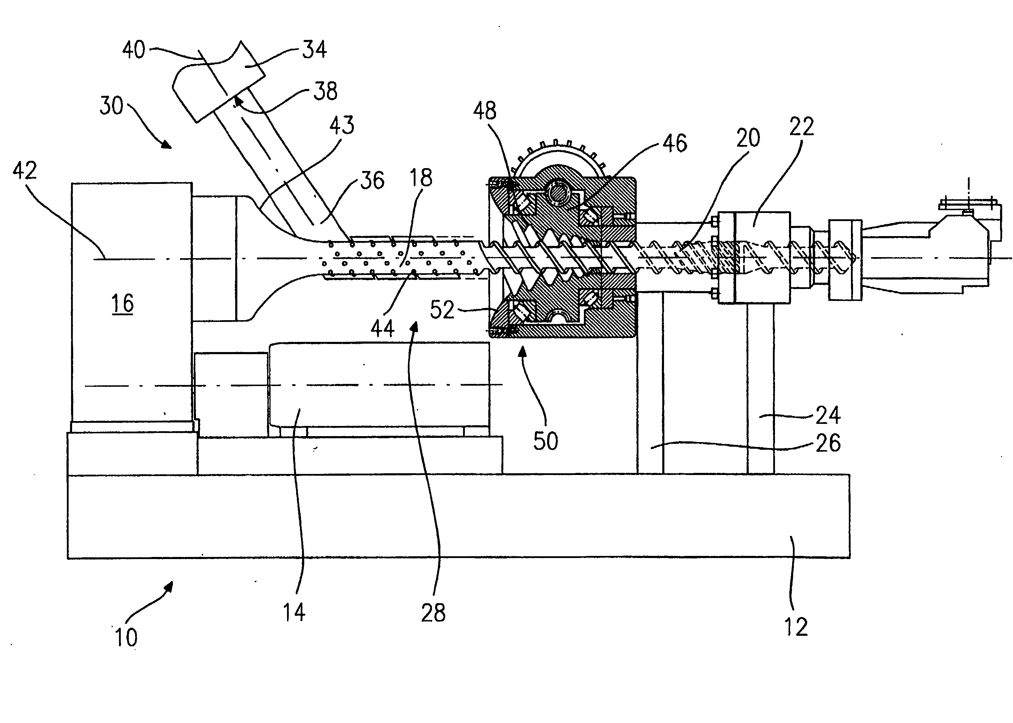

Weitere Vorteile, Einzelheiten und Merkmale ergeben sich aus der nachfolgenden Beschreibung eines Ausführungsbeispiels der Erfindung anhand der Zeichnung. Es zeigt:

Die einzige Figur der Zeichnung eine leicht schematisierte Seitenansicht einer erfindungsgemäßen Extrusionsvorrichtung.

Die einzige Figur der Zeichnung zeigt eine erfindungsgemäße Extrusionsvorrichtung 10 in einer erfindungsgemäßen Ausführungsform. Die Extrusionsvorrichtung 10 weist eine Gerätebasis 12 auf, auf welcher ein Antriebsmotor 14 abgestützt ist. Der Antriebsmotor 14 ist an ein Getriebe 16 angeflanscht, aus dem eine Antriebswelle 18 heraustritt. Die Antriebswelle 18 erstreckt sich quer über die Gerätebasis und geht in eine Extruderschnecke 20 über.

Die Extruderschnecke 20 ist in einem Extrudergehäuse 22 geführt, das über Stützen 24, 26 auf der Gerätebasis gestützt ist.

Die Antriebswelle 18 verläuft über einen erheblichen Bereich, den Zuführbereich 28 frei zwischen dem Getriebe 16 und dem Extrudergehäuse 22. Der Zuführbereich 28 ist Teil einer Axialfördereinrichtung 30, der ein Streifenförderer 34 zugeordnet ist, der in der Figur schematisch angedeutet ist. Der Streifenförderer 34 dient der kontinuierlichen Zufuhr eines Streifens 36 aus Kunststoff, insbesondere aus einem Elastomer, zu dem Zuführbereich 28 der Antriebswelle 18 hin. Der Streifenförderer 34 weist hierzu geeignete Walzen auf. An seinem Auslaß 38 verläßt der Materialstreifen 36 den Streifenförderer 34 entlang einer Achse 40. Diese Achse erstreckt sich schräg zur Achse 42 der Antriebswelle 18, und zwar in einer solchen Weise, daß der Streifen 36 beim Verlassen des Auslasses 38 in Richtung auf die Extruderschnecke 20 gefördert wird.

Es ist bevorzugt, wenn der Streifenförderer 34 dem Getriebe 16 benachbart montiert ist, so daß der Materialstreifen 36 über eine erhebliche Strecke über den freien Zuführbereich 28 der Antriebswelle 14 gefördert wird. Damit stellt sich eine Bewegung parallel zur Achse 42 der Antriebswelle 18 ein.

Die Antriebswelle 18 weist getriebeseitig eine konkave Ausrundung 43 und über ihren gesamten Zuführbereich 28 verteilte Mitnehmer 44 auf, die dafür geeignet sind, den Materialstreifen 36 mitzunehmen. In dem dargestellten Ausführungsbeispiel sind die Mitnehmer kleine Zapfen, die eher spitz in den Streifen 36 hereinragen und ein Durchrutschen verhindern. Alternativ ist es auch möglich, die Antriebswelle 18 mit einer entsprechend aufgerauhten Oberfläche zu versehen, oder regelrechte Haken vorzusehen, die den Streifen bereits dann seitlich greifen, wenn er in den Bereich der Welle herunterhängt. Bei dieser Lösung ergibt sich der besondere Vorteil, daß der Streifen ohne manuellen Eingriff in den Extruder eingeführt werden kann.

In dem dargestellten Ausführungsbeispiel sind die Mitnehmer 44 als Dorne ausgebildet, die wendelförmig am Außenumfang der Antriebswelle 18 angeordnet sind. Bei einer modifizierten Ausgestaltung ist es vorgesehen, am Auftreffpunkt des Materialstreifens 36 auf die Antriebswelle 18 eine gegenläufig rotierende Andruckrolle auszubilden. Der herunterhängende Materialstreifen gelangt selbsttätig in den Spalt zwischen Andruckrolle und Antriebswelle 18. Dort wird er auf die Mitnehmer 44 aufgespießt, so daß er auch bei der weiteren Drehung in Anlage mit der Antriebswelle 18 verbleibt. Beim weiteren Drehen der Antriebswelle 18 wird dann der Streifen mit definierter Geschwindigkeit bewegt, nachdem er bis zum Extrudergehäuse 22 auf der Welle 18 aufgerollt verbleibt und dort dann in den Bereich der Extruderschnecke 20 gerät.

Während beim Stand der Technik besondere Maßnahmen für die Synchronisierung zwischen Zuführung und Extruderschnecke vorgesehen sind, ergibt sich diese Synchronisierung erfindungsgemäß praktisch dadurch gleichsam automatisch, daß die Antriebswelle 18 fest mit der Extruderschnecke 20 verbunden ist. Wenn das Erstaufwickeln einmal erfolgt ist, vermag die Antriebswelle 18 den Materialstreifen 36 auch in dem erforderlichen Maß aus dem Auslaß herauszuziehen, so daß es auch in Betracht kommt, den Streifenförderer 34 über einen Spannungsfühler, der die Spannung im Materialstreifen 36 mißt, zu steuern. In einer besonders günstigen Ausgestaltung der Erfindung ist eine Gewindebuchse 46 eingangsseitig des Extrudergehäuses 22 vorgesehen. Die Gewindebuchse 46 weist ein Innengewinde 48 auf und dreht sich mit dem Innengewinde 48 gegenläufig zur Extruderschnecke 20. Hierdurch wird im Übergangsbereich 50 das feste oder halbfeste Material des Streifens 36 einer gegenläufigen Bewegung unterworfen, so daß die gleichmäßige kreisringförmige Verteilung um die Extruderschnecke noch unterstützt wird, zumal eingangsseitig der Extruderschnecke eine Zuführschräge 52 vorgesehen ist. Diese Lösung ist insbesondere dann wichtig, wenn ein Materialstreifen durch achsparalleles Aufschieben im Bereich der Antriebswelle 18, also ohne Aufwickeln, zugeführt wird. Ein aufgeschobener Materialstreifen umgibt die Antriebswelle 18 regelmäßig nicht vollständig, sondern beispielsweise lediglich zu 3/4. Durch das gegenläufige Innengewinde 48 wird dann gepaart mit der Vergleichmäßigung der Zufuhr auch dafür gesorgt, daß am Außenumfang des zu klassifizierenden Materialstreifens keine partielle Gegenströmung oder ein Stauwulst entsteht.

Es versteht sich, daß es erfindungsgemäß auch ohne weiteres möglich ist, mehrere Materialstreifen parallel zueinander zuzuführen, wenn die Extrusionsvorrichtung 10 auch als Mischvorrichtung dienen soll. Beispielsweise können neben mehrere Streifenförderer 34 hintereinander oder auf der gleichen axialen Höhe, jedoch im Drehwinkel versetzt zueinander, angeordnet sein.

Während in dem erfindungsgemäß dargestellten Ausführungsbeispiel die Einheit aus Antriebswelle 18 und Extruderschnecke 20 einstückig ausgebildet ist, ist es auch möglich, diese beiden Teile im Übergangsbereich teilbar auszubilden, beispielsweise um eine leichtere Entnahme der Extruderschnecke 20 aus dem Extrudergehäuse 22 zu Reinigungszwecken zu ermöglichen.

## Patentansprüche

1. Extrusionsvorrichtung (10), mit einer Extruderschnecke (20), über welche zu extrudierendes Material förderbar, insbesondere plastifizierbar ist, wobei die Extruderschnecke(20) über eine Welle (18) von einem Antriebsmotor (14) angetrieben ist, und mit einer Zuführeinrichtung für das Material, **dadurch gekennzeichnet, dass** die Zuführeinrichtung eine Axialfördereinrichtung (30) aufweist, mittels derer ein Streifen (36) des Materials im wesentlichen achsparallel zu der Welle (18) und/oder Extruderschnecke (20) dieser zuführbar und während der Drehung der Welle (18) förderbar ist, wobei die Axialfördereinrichtung (30) eine Wickeleinrichtung zum Aufwickeln des Materialstreifens (36) auf der Welle (18) und/oder der Extruderschnecke (20) aufweist.

2. Extrusionsvorrichtung (10) nach Anspruch 1, **dadurch gekennzeichnet, dass** der Materialstreifen (36) über die Wickeleinrichtung schräg auf der Welle (18) und/oder der Extruderschnecke (20) aufwickelbar und durch Drehung der Extruderschnecke (20) förderbar ist.

3. Extrusionsvorrichtung (10) nach Anspruch 1 oder 2, dadurch ge kennzeichnet, daß der Streifen (36) des Materials weitergehend auf dem vollen Umfang der Welle (18) der Extruderschnecke (20) zuführbar ist.

4. Extrusionsvorrichtung (10) nach einem der vorhergehenden Ansprüche, **dadurch gekennzeichnet, dass** der Materialstreifen (36) derart zugeführt ist, dass die Welle (18) im Übergangsbereich zur Extruderschnecke (20) im wesentlichen vom Materialstreifen (36) umgeben ist.

5. Extrusionsvorrichtung (10) nach einem der vorhergehenden Ansprüche, **dadurch gekennzeichnet, daß** der Materialstreifen (36) eine Breite aufweist, die 5 bis 200 %, insbesondere 30 bis 150 % des Durchmessers der Welle (18) und insbesondere eine Breite von etwa dem Wellendurchmesser aufweist.

6. Extrusionsvorrichtung (10) nach einem der Ansprüche 1 bis 4, **dadurch gekennzeichnet, daß** der Materialstreifen (36) eine Breite aufweist, die mehr als die Hälfte des Durchmessers der Welle (18), insbesondere etwas weniger als der Umfang der Welle (18) beträgt, und eine ebene Grundfläche aufweist.

7. Extrusionsvorrichtung (10) nach einem der vorhergehenden Ansprüche, **dadurch gekennzeichnet, daß** die Wickeleinrichtung einen Streifenförderer (34) aufweist, der einen Materialstreifen (36) in Richtung der Welle (18) bewegt und von der Welle beabstandet ist, wobei der Streifenförderer (34) mit seinem Auslaß (38) oberhalb der Welle (18) angeordnet ist, und der Materialstreifen (36) biegeschlaff in Richtung der Welle (18) hängt.

8. Extrusionsvorrichtung (10) nach einem der vorhergehenden Ansprüche, **dadurch gekennzeichnet, daß** die Welle (18) sich über eine Länge von mindestens dem zweifachen Durchmesser der Extruderschnecke (20) frei erstreckt und dort einen Zuführbereich (28) für den Materialstreifen (36) bildet.

9. Extrusionsvorrichtung (10) nach einem der vorhergehenden Ansprüche, **dadurch gekennzeichnet, daß** die Welle (18) an ihrem motorseitigen Ende eine Aufweitung (43) aufweist, die insbesondere konkav profiliert ist.

10. Extrusionsvorrichtung (10) nach einem der vorhergehenden Ansprüche, **dadurch gekennzeichnet, daß** die Welle (18) einen Außendurchmesser aufweist, der im wesentlichen dem Außen durchmesser der Extruderschnecke (20) entspricht.

11. Extrusionsvorrichtung (10) nach einem der vorhergehenden Ansprüche, **dadurch gekennzeichnet, daß** die Welle (18) im Zuführ bereich einziehbare Mitnehmer (44) aufweist, über welche eine Verbindung zwischen dem Materialstreifen (36) und der sich drehenden Welle (18) realisierbar ist.

12. Extrusionsvorrichtung (10) nach einem der vorhergehenden Ansprüche, **dadurch gekennzeichnet, daß** der Materialstreifen (36) unter Bildung einer im wesentlichen vollständigen Umhüllung der Welle (18) dem Übergangsbereich (50) zur Extruderschnecke (20) zuführbar ist.

13. Extrusionsvorrichtung (10) nach einem der vorhergehenden Ansprüche, **dadurch gekennzeichnet, daß** der Übergangsbereich (50) zwischen Welle (18) und Extruderschnecke (20) einen sich in Förderrichtung verjüngenden Spalt aufweist.

14. Extrusionsvorrichtung (10) nach Anspruch 13, **dadurch gekennzeichnet, daß** der Spalt als Ringspalt ausgebildet ist und eine Zuführschräge (52) für den Materialstreifen (36) aufweist.

15. Extrusionsvorrichtung (10) nach einem der vorhergehenden Ansprüche, **dadurch gekennzeichnet, daß** der Übergangsbereich (50) zwischen Welle (18) und Extruderschnecke (20) mit einer Buchse (46) versehen ist, die ein Innengewinde (48) aufweist, das sich mit einer Drehzahl dreht, die von der Drehgeschwindigkeit der Extruderschnecke (20) verschieden ist.

16. Extrusionsvorrichtung (10) nach Anspruch 15, **dadurch gekennzeichnet, daß** die Gewindebuchse (46) mit einem Innengewinde (48) ausgestattet ist, das sich gegenüber der Extruderschnecke (20) gegenläufig erstreckt und dessen Durchmesser in Förderrichtung abnimmt.

17. Extrusionsvorrichtung (10) nach einem der vorhergehenden Ansprüche, **dadurch gekennzeichnet, daß** die Welle (18) und die Extruderschnecke (20) ohne Querschnittssprünge und insbesondere einstückig ausgebildet sind und daß zu Wartungszwecken entweder das Extrudergehäuse oder die Einheit aus Extruderschnecke, Welle und Antriebsmotor zur Trennung voneinander auseinanderfahrbar sind.

18. Verfahren zur Beschickung eines Extruders (10) mit einer Extruderschnecke (20) und einem Extrudergehäuse (22), bei welchem zu extrudierendes Material über eine zuführeinrichtung zugeführt wird, **dadurch gekennzeichnet, dass** ein Materialstreifen (36) der Extruderschnecke (20) im wesentlichen parallel zu deren Achse und im wesentlichen entlang einer Welle (18), die sich an die Extruderschnecke (20) anschließt, zugeführt wird, wobei der Materialstreifen (36) von der Welle (18) mindestens teilweise aufgewickelt wird.

19. Verfahren nach Anspruch 18, **dadurch gekennzeichnet, daß** der Materialstreifen (36) etwas schräg von oben der Welle (18) in einem Zuführbereich zugeführt wird und während der Drehung der Welle (18) zur Extruderschnecke (20) hin gefördert wird.

## Claims

1. An extrusion apparatus (10) with an extrusion worm (20), via which material for extrusion is transportable, preferably plasticisable, where the extrusion worm (20) is driven by a drive motor (14) via a shaft (18), and with a feed in device for the material, **characterised in that** the feed in device comprises an axial transport device, by means of which a strip (36) of material can be advanced towards the shaft (18) and fed into the shaft (18) substantially parallel to the axis of the shaft (18) and/or extrusion worm during rotation of the shaft (18), where the axial transport device (30) comprises a winding installation for winding the material strip (36) on the shaft (18) and/or the extrusion worm (20).

2. An extrusion apparatus (10) according to claim 1, **characterised in that** the material strip (36) is windable via the winding installation at an angle on the shaft (18) and/or the extrusion worm (20) and is transported by rotation of the extrusion worm (20).

3. An extrusion apparatus (10) according to claim 1 or 2, **characterised in that** the strip (36) of material is subsequently transportable around the full periphery of the shaft (18) of the extrusion worm (20).

4. An extrusion apparatus (10) according to one of the preceding claims, **characterised in that** the strip (36) of material is fed in in such a way that the shaft (18) is substantially surrounded by the strip (36) of material in the transition region to the extrusion worm (20).

5. An extrusion apparatus (10) according to, **characterised in that** the material strip (36) has a width, which is 5% to 200% of the diameter of the shaft (18), preferably 30% to 150% of the diameter of the shaft (18), and preferably approximately the diameter of the shaft (18).

6. An extrusion apparatus (10) according to one of the claims 1 to 4, **characterised in that** the material strip (36) has a width, which is greater than half the diameter of the shaft (18), preferably somewhat less than the circumference of the shaft (18) and has a smooth surface.

7. An extrusion apparatus (10) according to one of the preceding claims, **characterised in that** the winding installation has a strip conveyor (34) which displaces a material strip (36) towards the shaft (18) and is distanced from the shaft, where the strip conveyor (34) is arranged with its outlet above the shaft (18) and the material strip (36) hangs in a flexible disposition in the direction of the shaft (18).

8. An extrusion apparatus (10) according to one of the preceding claims, **characterised in that** the shaft (18) extends over a length of at least twice the diameter of the extrusion worm (20) and forms a feed in area there for the material strip (36).

9. An extrusion apparatus (10) according to one of the preceding claims, **characterised in that** the shaft (18) has an enlargement, which preferably has a concave profile at the motor-side end.

10. An extrusion apparatus (10) according to one of the preceding claims, **characterised in that** the shaft (18) has an outer diameter that corresponds substantially to the outer diameter of the extrusion worm (20).

11. An extrusion apparatus (10) according to one of the preceding claims, **characterised in that** the shaft (18) has retractable engagement elements in the feed in region, via which a connection between the material strip (36) and rotating shaft (18) can be achieved.

12. An extrusion apparatus (10) according to one of the preceding claims, **characterised in that** the material strip (36) can be advanced to a transition region to the extrusion worm (20), while substantially fully encircling the shaft (18).

13. An extrusion apparatus (10) according to one of the preceding claims, **characterised in that** the transition region between shaft (18) and extrusion worm (20) has a slit tapering in the direction of the advancement.

14. An extrusion apparatus (10) according to claim 13, **characterised in that** the slit is configured as an annular slit having a feed in angle for the material strip.

15. An extrusion apparatus (10) according to one of the preceding claims, **characterised in that** the transition region betweer shaft (18) and extrusion worm (20) has a bush (46), having an inner thread (48) that turns with a rate of rotation, which is different from the rate of rotation of the extrusion worm (20).

16. An extrusion apparatus (10) according to claim 15, **characterised in that** the threaded bush (46) is equipped with an inner thread (48), which extends counter to the extrusion worm (20) and the diameter of which reduces in the direction of the advancement.

17. An extrusion apparatus (10) according to one of the preceding claims **characterised in that** the shaft (18) and the extrusion worm (20) are configured without cross-sectional breaks and preferably as a single unit and for separation for maintenance purposes either the extruder housing or the unit composed of extrusion worm, shaft and drive motor can be disassembled for permitting access to the extrusion apparatus.

18. A process for loading an extruder (10) with an extrusion worm (20) and an extruder housing (22), through which material to be extruded is fed in via a feed in device, **characterised in that** a material strip (36) is fed into the extrusion worm (20) substantially parallel to the latter's axis and substantially along a shaft (18), which is connected to the extrusion worm (20), where the material strip (36) is at least partially wound up by the shaft (18) onto a threaded operatively coupled to the shaft (18).

19. A process according to claim 18, **characterised in that** the material strip (36) is fed into a feed in region somewhat at an angle from above the shaft (18) and is transported to the extruder worm (20) during the rotation of the shaft (18).

## Revendications

1. Dispositif d'extrusion (10), avec une vis d'extrusion sans fin (20), par laquelle du matériel à extruder est transportable et de préférence plastifiable, où la vis d'extrusion sans fin est commandée par un moteur de commande (14) à travers un arbre (18) et avec un dispositif pour faire avancer le matériel, **caractérisé en ce que** le dispositif d'avancement présente un convoyeur axial (30), par l'intermédiaire duquel une bande (36) de matériel peut être avancée essentiellement, axialement parallèle à l'arbre (18) et/ou à la vis d'extrusion sans fin (20) et est transportable pendant la rotation de l'arbre (18), où le convoyeur axial (30) présente une installation d'enroulement pour enrouler la bande de matériel (36) sur l'arbre (18) et/ou sur la vis d'extrusion sans fin (20).

2. Dispositif d'extrusion (10) selon la revendication 1, **caractérisé en ce que** la bande de matériel (36) soit enroulable en diagonale sur l'arbre (18) par l'installation de bobinage et/ou par la vis d'extrusion sans fin (20) et transportable par la rotation de la vis d'extrusion sans fin (20).

3. Dispositif d'extrusion (10) selon la revendication 1 ou 2, **caractérisé en ce que** la bande (36) de matériel soit transportable à continuation sur toute l'ampleur de l'arbre (18) de la vis d'extrusion sans fin (20).

4. Dispositif d'extrusion (10) selon l'une des revendications précédentes, **caractérisé en ce que** la bande de matériel (36) soit avancée de telle manière que l'arbre (18) soit essentiellement enveloppé par la bande de matériel (36) dans la zone de transition vers la vis d'extrusion sans fin (20).

5. Dispositif d'extrusion (10) selon l'une des revendications précédentes, **caractérisé en ce que** la bande de matériel (36) présente une largeur de 5 à 200 %, de préférence 30 à 150% du diamètre de l'arbre (18) et de préférence une largeur d'environ le diamètre de l'arbre.

6. Dispositif d'extrusion (10) selon l'une des revendications 1 à 4, **caractérisé en ce que** la bande de matériel (36) présente une largeur qui s'étend à plus de la moitié du diamètre de l'arbre (18), de préférence légèrement inférieure à l'ampleur de l'arbre (18) et présente une surface plane.

7. Dispositif d'extrusion (10) selon l'une des revendications précédentes, **caractérisé en ce que** l'installation de bobinage présente un convoyeur de bande (34) qui déplace une bande de matériel (36) en direction de l'arbre (18) et est distancé de l'arbre, où le convoyeur de bande (34) est disposé avec son échappement (38)au-dessus de l'arbre (18), et la bande de matériel (36) pend détendue en direction de l'arbre (18).

8. Dispositif d'extrusion (10) selon l'une des revendications précédentes, **caractérisé en ce que** l'arbre (18) s'étende librement sur une longueur d'au moins le double du diamètre de la vis d'extrusion sans fin (20) et forme une zone d'avancée (28) pour la bande de matériel (36).

9. Dispositif d'extrusion (10) selon l'une des revendications précédentes, **caractérisé en ce que** l'arbre (18) présente un élargissement (43), qui est profilée, de préférence concave, à son extrémité côté moteur.

10. Dispositif d'extrusion (10) selon la revendication précédente, **caractérisé en ce que** l'arbre (18) présente un diamètre extérieur qui correspond essentiellement au diamètre extérieur de la vis d'extrusion sans fin (20).

11. Dispositif d'extrusion (10) selon l'une des revendications précédentes, **caractérisé en ce que** l'arbre (18) présente dans le secteur de transport des entraîneurs (44) escamotables, par lesquels une connexion est réalisable entre la bande de matériel (36) et l'arbre (18) en rotation.

12. Dispositif d'extrusion (10) selon l'une des revendications précédentes, **caractérisé en ce que** la bande de matériel (36) puisse être avancée à la zone de transition (50) vers la vis d'extrusion sans fin (20) en enveloppant essentiellement complètement l'arbre (18).

13. Dispositif d'extrusion (10) selon l'une des revendications précédentes, **caractérisé en ce que** la zone de transition (50) entre l'arbre (18) et la vis d'extrusion sans fin (20) présente une fente rétrécissant dans le sens du transport.

14. Dispositif d'extrusion (10) selon la revendication 13, **caractérisé en ce que** la fente soit formée comme fente annulaire et présente un sens oblique de transport (52) pour la bande de matériel (36).

15. Dispositif d'extrusion (10) selon l'une des revendications précédentes, **caractérisé en ce que** la zone de transition (50) entre l'arbre (18) et la vis d'extrusion sans fin (20) soit équipée d'une douille (46) qui présente un filet femelle (48) ayant une vitesse de rotation différente de celle de la vis d'extrusion sans fin (20).

16. Dispositif d'extrusion (10) selon la revendication 15, **caractérisé en ce que** la douille taraudée (46) soit équipée d'un filet femelle (48), qui s'étend dans le sens opposé par rapport à la vis d'extrusion sans fin (20) et dont le diamètre diminue dans le sens du transport.

17. Dispositif d'extrusion (10) selon l'une des revendications précédentes, **caractérisé en ce que** l'arbre (18) et la vis d'extrusion sans fin (20) soient formés sans fissures transversales et de préférence comme pièce unique et qu'à des fins d'entretien soit le boîtier d'extrusion, soit l'unité formée par la vis sans fin d'extrusion, la vague et le moteur de commande soit démontable pour la séparation.

18. Procédure pour charger une extrudeuse (10) avec une vis d'extrusion sans fin (20) et un boîtier d'extrusion (22), par laquelle du matériel à extruder est avancé sur une installation d'avancement, **caractérisée en ce qu'**une bande de matériel (36) soit avancée depuis la vis d'extrusion sans fin (20) essentiellement parallèle à l'axe de celle-ci et essentiellement le long d'un arbre (18) qui se raccorde à la vis d'extrusion sans fin (20), où la bande de matériel (36) est enroulée au moins partiellement par l'arbre (18).

19. Procédure selon la revendication 18, **caractérisé en ce que** la bande de matériel (36) soit transportée légèrement en diagonale depuis le haut de l'arbre (18) dans une zone d'avancement et soit transportée lors de la rotation de l'arbre (18)vers la vis d'extrusion sans fin (20).
